# EUROPEAN PATENT APPLICATION

(11) **EP 4 635 691 A1**
(43) Date of publication of application: **22.10.2025**
(21) Application number: 23903068.7
(22) Date of filing: 29.09.2023
(51) Int. Cl.: B25J 15/08

(54) **WORKPIECE HOLDER, CHUCK DEVICE, AND METHOD FOR MANUFACTURING WORKPIECE HOLDER**

(30) Priority: 13.12.2022 WO PCT/JP2022/045889
(71) Applicant: SMC Corporation, Tokyo 104-0031 (JP)
(72) Inventor: KATO, Naoki, Tsukubamirai-shi, Ibaraki 300-2493 (JP)
(74) Representative: Keil & Schaafhausen Patentanwälte PartGmbB
(86) International application number: PCT/JP2023/035654
(87) International publication number: WO 2024/127768

(57) **Abstract**

A workpiece holder (10) of a chuck device (12) comprises a U-shaped frame part (40) and a flexible holding sheet (42) fixed to the frame part, wherein: the frame part has a first side portion (44) and a second side portion (46) that are arranged apart from and in parallel to each other, and a connection part (48) that connects the first side portion and the second side portion; the holding sheet is fixed to the first side portion and the second side portion while extending so as to straddle an opening between the first side portion and the second side portion; and a width (L1) of the first side portion is 1/4 or less of an interval (L2) between the first side portion and the second side portion.

## Description

### TECHNICAL FIELD

The present invention relates to a workpiece holder, a chuck device, and a method for manufacturing a workpiece holder.

### BACKGROUND ART

For example, in JP 2015-166121 A, there is disclosed a chuck device in which a workpiece holder which clamps a workpiece is installed on each of respective fingers that move in one direction so as to approach toward and separate away from each other. Such a workpiece holder is equipped with a membrane-shaped member that contacts the workpiece, and a support mechanism that supports the membrane-shaped member. The support mechanism is assembled from a plurality of members such as a base, a moving frame member, an elastic mechanism including a coil spring, a rod member, and the like.

### SUMMARY OF THE INVENTION

The above-described workpiece holder is of a complex structure, which tends to increase the manufacturing cost, and the workpiece holder is incapable of holding a plurality of workpieces whose external shapes differ.

The present invention has the object of solving the aforementioned problem.

A first aspect of the present invention is characterized by a workpiece holder installed on each of a pair of fingers configured to move in one direction so as to approach toward and separate away from each other, the workpiece holder being configured to clamp a workpiece, the workpiece holder comprising a frame member having a U-shape, and a holding sheet having flexibility and fixed to the frame member, wherein the frame member includes a first side part and a second side part disposed in parallel in a state of being separated away from each other, and a connecting portion configured to connect the first side part and the second side part, wherein the holding sheet is fixed to the first side part and the second side part in a state of extending across an opening between the first side part and the second side part, and a width of the first side part is less than or equal to one fourth of a distance between the first side part and the second side part.

A second aspect of the present invention is characterized by a chuck device, comprising a pair of fingers configured to move in one direction so as to approach toward and separate away from each other, a drive unit configured to move the pair of fingers, and a pair of workpiece holders installed respectively on the pair of fingers and configured to clamp a workpiece, wherein each of the pair of workpiece holders is the above-described workpiece holder.

A third aspect of the present invention is characterized by a method for manufacturing a workpiece holder installed on each of a pair of fingers configured to move in one direction so as to approach toward and separate away from each other, the workpiece holder being configured to clamp a workpiece, wherein the workpiece holder includes a frame member having a U-shape, and a holding sheet having flexibility and fixed to the frame member, wherein the frame member includes a first side part and a second side part disposed in parallel in a state of being separated away from each other, and a connecting portion configured to connect the first side part and the second side part, wherein the holding sheet is fixed to the first side part and the second side part in a state of extending across an opening between the first side part and the second side part, and a width of the first side part is less than or equal to one fourth of a distance between the first side part and the second side part, wherein the frame member includes a supporting plate member having a shape conforming to the shape of the frame member, and a covering portion configured to cover the supporting plate member, and wherein, in the method for manufacturing the workpiece holder, a rubber sheet is attached to the supporting plate member in a state where both sides of a portion of the supporting plate member that forms the first side part are supported by a pair of convex parts provided on a mold.

According to the present invention, since the holding sheet is fixed to the first side part and the second side part in a state of extending across the opening between the first side part and the second side part, the configuration of the workpiece holder can be simplified. Further, since the holding sheet that has flexibility is pressed against the workpiece and thereby is elastically deformed to conform to the external shape of the workpiece, it is possible to clamp a plurality of the workpieces of different external shapes by a single type of workpiece holder. Furthermore, since the width of the first side part is less than or equal to one fourth of the distance between the first side part and the second side part, it is possible to suppress a situation in which, when the workpiece is clamped, the first side part interferes with the surrounding member of the workpiece that serves as an object to be grasped.

The above-described objects, features, and advantages will be easily understood from the following description of the embodiments, which are described below with reference to the accompanying drawings.

### BRIEF DESCRIPTION OF DRAWINGS

[FIG. 1] FIG. 1 is a plan view of a chuck device according to an embodiment of the present invention;
[FIG. 2] FIG. 2 is an exploded perspective view of the chuck device shown in FIG. 1 with a portion thereof omitted;
[FIG. 3] FIG. 3 is a plan view of a workpiece holder shown in FIG. 2;
[FIG. 4] FIG. 4 is a cross-sectional view taken along line IV-IV of FIG. 3;
[FIG. 5] FIG. 5 is a diagram illustrating a first operation of the chuck device shown in FIG. 1;
[FIG. 6] FIG. 6 is a diagram illustrating a second operation of the chuck device shown in FIG. 1;
[FIG. 7] FIG. 7 is a cross-sectional view taken along line VII-VII of FIG. 6;
[FIG. 8] FIG. 8 is a diagram illustrating a third operation of the chuck device shown in FIG. 1;
[FIG. 9] FIG. 9 is a plan view of a workpiece holder according to a first exemplary modification;
[FIG. 10] FIG. 10 is a cross-sectional view taken along line X-X of FIG. 9;
[FIG. 11] FIG. 11A is an explanatory diagram of an example of holding a workpiece using a workpiece holder according to a comparative example, and FIG. 11B is an explanatory diagram of an example of holding a workpiece using the workpiece holder according to the first exemplary modification;
[FIG. 12] FIG. 12 is a plan view of a workpiece holder according to a second exemplary modification;
[FIG. 13] FIG. 13 is a cross-sectional view taken along line XIII-XIII of FIG. 12; and
[FIG. 14] FIG. 14A and FIG. 14B are explanatory diagrams showing a state in which a supporting plate member is set in a mold.

### DETAILED DESCRIPTION OF THE INVENTION

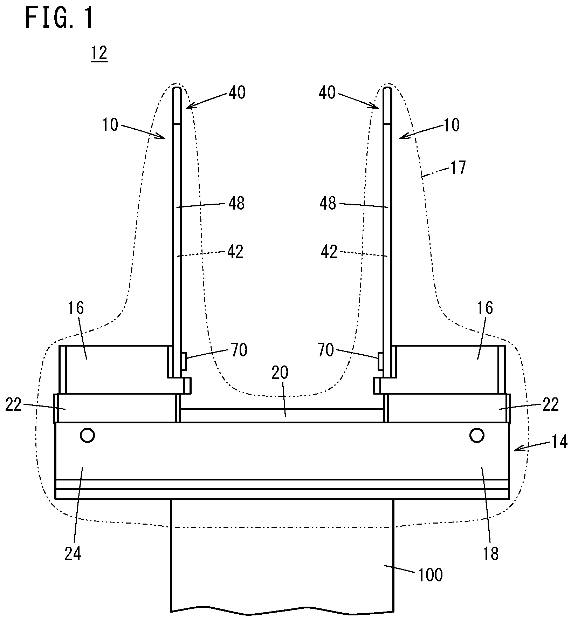

A shown in FIG. 1 and FIG. 5 to FIG. 8, a chuck device 12 according to an embodiment of the present invention, for example, is constituted as a robot hand that serves to grasp and transport a workpiece W. However, the usage of the chuck device 12 is not particularly limited to this feature.

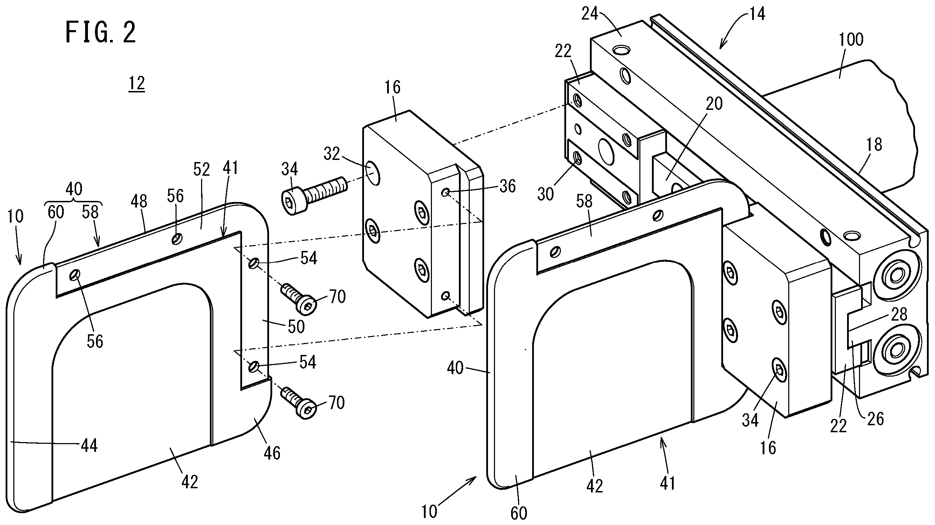

As shown in FIG. 1, the chuck device 12 is equipped with a chuck main body 14, a pair of connecting members 16, a pair of workpiece holders 10, and a cover 17. First, with reference to FIG. 1 and FIG. 2, a description will be given of the chuck main body 14 and the pair of connecting members 16. The chuck main body 14 is configured, for example, in the form of an air chuck. The chuck main body 14 includes a drive unit 18, a guide unit 20, and a pair of fingers 22 (moving bodies).

The drive unit 18 is an actuator for moving the pair of fingers 22. The drive unit 18 is configured in the form of an air cylinder. A body 24 of the drive unit 18 extends in one direction. The guide unit 20 is a linear guide that guides the pair of fingers 22 in a longitudinal direction (one direction) of the body 24. The guide unit 20 includes a rail portion 26 that is provided on the outer surface of the body 24.

The pair of fingers 22 move in one direction (the longitudinal direction of the body 24) in a manner so as to approach toward and separate away from each other. Each of the fingers 22 is formed, for example, in the shape of a flat plate. On a surface facing toward the drive unit 18 within the outer surface of the finger 22, there is formed a concave part 28 into which the rail portion 26 is inserted. On a surface that faces in an opposite direction from the drive unit 18 within the outer surface of the finger 22, there are formed a plurality of first mounting holes 30 for the purpose of mounting various attachments. Each of the first mounting holes 30 is a screw hole.

The shape, the size, or the like of the fingers 22 can be appropriately set. The chuck main body 14 is not limited to being an air chuck. The drive unit 18 of the chuck main body 14 may be an electric actuator, a hydraulic actuator, or the like.

The connecting members 16 are intermediate attachments for the purpose of mounting the workpiece holders 10 to the fingers 22. In the chuck device 12, in the case that the workpiece holders 10 are capable of being directly mounted on the fingers 22, the connecting members 16 are unnecessary. The pair of connecting members 16 are mounted respectively on the pair of fingers 22.

The connecting members 16 are comparatively thick plateshaped members. The connecting members 16 are each provided with a plurality of through holes 32 penetrating therethrough in the thickness direction. The connecting members 16 are attached to the fingers 22 by a plurality of first screw members 34 being passed through the plurality of through holes 32 and fastened respectively into the plurality of first mounting holes 30. A plurality (two in the example shown in FIG. 2) of second mounting holes 36 for the purpose of mounting the workpiece holder 10 are formed in the side surface of the connecting member 16. The second mounting holes 36 are screw holes.

As shown in FIG. 2 to FIG. 4, the workpiece holders 10 are each formed in a thin plate shape as a whole. A maximum thickness of the workpiece holder 10 is preferably less than or equal to 10 mm, and more preferably, is less than or equal to 5 mm.

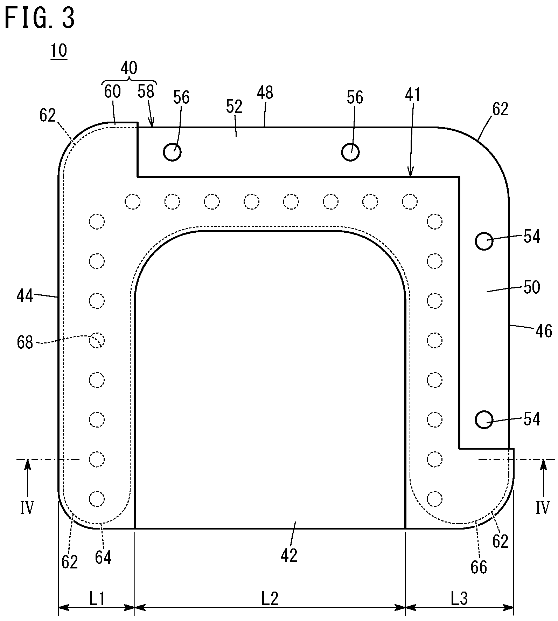

In FIG. 3, the workpiece holders 10 are each formed by fixing a sheet portion 41 made of resin to a U-shaped supporting plate member 58. The workpiece holders 10 are integrally molded, for example, by insert molding. The sheet portion 41 includes a covering portion 60 that is fixed to the supporting plate member 58, and a holding sheet 42 having flexibility and covering an opening of the supporting plate member 58. The supporting plate member 58 and the covering portion 60 form a frame member 40 that extends in a U-shape along the outer periphery of the holding sheet 42. The frame member 40 includes a first side part 44 and a second side part 46 that are disposed in parallel in a state of being separated away from each other, and a connecting portion 48 that connects the first side part 44 and the second side part 46.

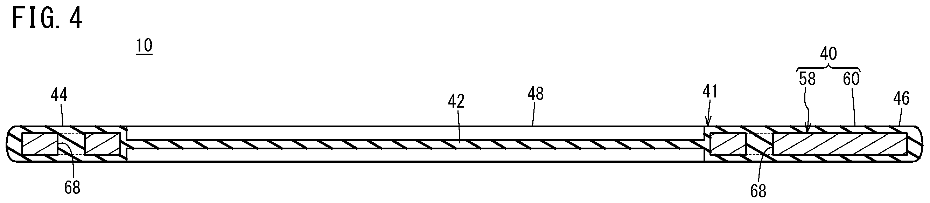

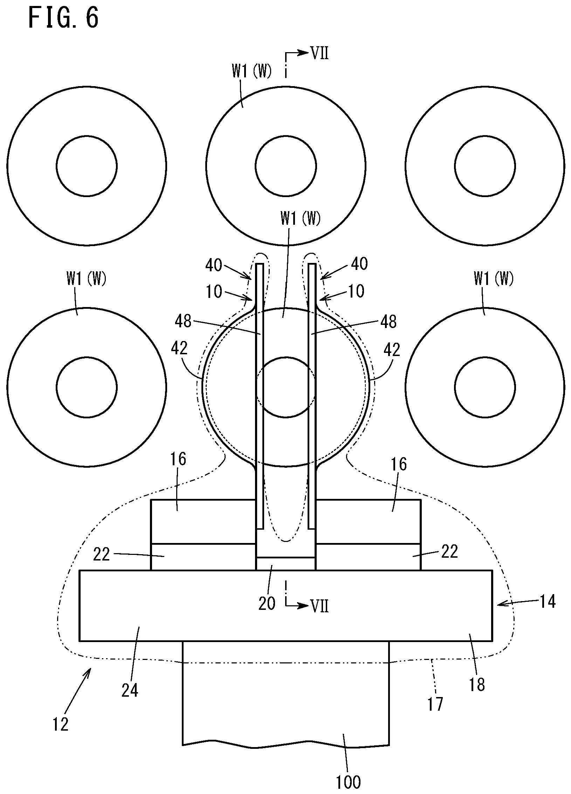

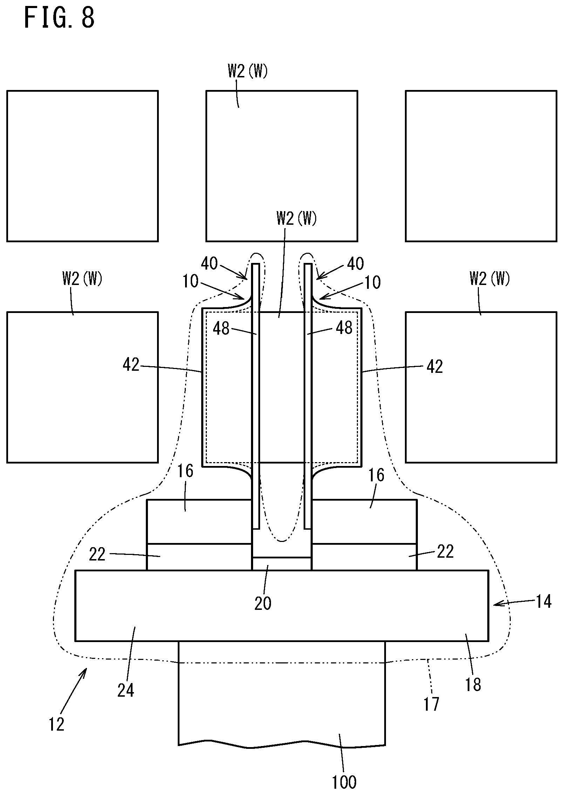

The holding sheet 42 is fixed to the first side part 44, the second side part 46, and the connecting portion 48 in a state of extending across an opening between the first side part 44 and the second side part 46. In other words, the holding sheet 42 covers the entirety of the opening between the first side part 44 and the second side part 46. More specifically, the holding sheet 42 has a quadrangular shape. However, the holding sheet 42 need not necessarily cover the entirety of the opening between the first side part 44 and the second side part 46. For example, a gap may exist between the holding sheet 42 and the connecting portion 48. The thickness of the holding sheet 42 is smaller than the thickness of the frame member 40 (refer to FIG. 4). The holding sheets 42 elastically deform to conform to the shape of the workpiece W when the workpiece W is held by the workpiece holders 10 (refer to FIG. 6 and FIG. 8).

The length of the first side part 44 along the direction in which it extends is the same as the length of the second side part 46 along the direction in which it extends. However, the length of the first side part 44 along the direction in which it extends may be longer than or shorter than the length of the second side part 46 along the direction in which it extends.

A width L1 of the first side part 44 is less than or equal to one fourth of an interval L2 between the first side part 44 and the second side part 46. The interval L2 is the same as the width of the holding sheet 42. The second side part 46 is wider than the first side part 44. A width L3 of the second side part 46, for example, is 1.2 times or more the width L1 of the first side part 44. The width L3 is narrower than the interval L2. The width L1, the interval L2, and the width L3 can be appropriately changed depending on the size of the workpiece holder 10. The width L1 may be less than or equal to one fifth of the interval L2. The width L3 may be two times or more the width L1. The widths herein refer to lengths of the first side part 44 and the second side part 46 in the direction in which they are disposed alongside one another.

The frame member 40 includes a first mounting member 50 and a second mounting member 52. The first mounting member 50 and the second mounting member 52 are capable of being mounted on one of the pair of fingers 22 (refer to FIG. 2). The second side part 46 includes the first mounting member 50. The first mounting member 50 is positioned at an end part of the second side part 46 on a side opposite to the holding sheet 42. The first mounting member 50 includes a plurality (two in the example shown in FIG. 3) of first insertion holes 54 that are disposed while being spaced apart with an interval therebetween.

The connecting portion 48 includes the second mounting member 52. The second mounting member 52 is positioned at an end part of the connecting portion 48 on a side opposite to the holding sheet 42. The second mounting member 52 includes a plurality (two in the example shown in FIG. 3) of second insertion holes 56 that are disposed while being spaced apart with an interval therebetween. Moreover, it should be noted that the number, the position, the size, and the shape of the first insertion holes 54 and the second insertion holes 56 can be appropriately set.

The supporting plate member 58 has a shape that conforms to the shape of the frame member 40. The supporting plate member 58 is made up by a metallic material and has a flat plate shape. As the metallic material constituting the supporting plate member 58, there may be cited, for example, stainless steel and an aluminum alloy, but the metallic material is not necessarily limited to these examples. The supporting plate member 58 may be integrally molded from a hard resin material.

Respective corner parts 62 of the supporting plate member 58 are rounded. Further, the supporting plate member 58 has a first end part 64 and a second end part 66. The first end part 64 is positioned at an end part of the first side part 44 on a side opposite to the connecting portion 48. The second end part 66 is positioned at an end part of the second side part 46 on a side opposite to the connecting portion 48. Each of the first end part 64 and the second end part 66 project out in an arcuate shape (a semicircular shape) in a direction away from the connecting portion 48. The supporting plate member 58 includes the first mounting member 50 and the second mounting member 52 described above. The first mounting member 50 and the second mounting member 52 are connected to each other at the corner part 62 of the supporting plate member 58.

The sheet portion 41 including the covering portion 60 and the holding sheet 42 is integrally molded from a material containing rubber. The sheet portion 41 is constituted, for example, by a material in which reinforcing fibers (carbon fibers, nylon fibers, or the like) are inserted into a rubber base material. As the rubber that is used for the sheet portion 41, there may be cited, for example, ethylene propylene rubber (EPDM), silicone rubber, nitrile rubber (NBR), and urethane rubber or the like, but the rubber is not necessarily limited to these examples.

A plurality of holes 68 are formed to penetrate through the supporting plate member 58. The plurality of holes 68 are spaced apart from one another with an interval therebetween along the outer periphery of the holding sheet 42. In other words, the plurality of holes 68 are disposed in a manner so as to surround the three sides of the quadrangular holding sheet 42 from the exterior. Each of the respective holes 68 is a circular hole. The shape, the size, the number, and the arrangement of the plurality of holes 68 can be appropriately set.

The covering portion 60 (the material containing rubber) fits into the plurality of holes 68 (refer to FIG. 4). In accordance with this feature, the covering portion 60 is fixed even more firmly to the supporting plate member 58. The covering portion 60 is formed, for example, by a rubber lining in which a rubber sheet is attached to the supporting plate member 58 by an adhesive or the like. Moreover, the covering portion 60 may be molded integrally together with the supporting plate member 58 by insert molding.

The covering portion 60 covers a major portion of the supporting plate member 58. The covering portion 60 covers the entirety of the supporting plate member 58 except for the first mounting member 50 and the second mounting member 52. The covering portion 60 covers the plurality of the corner parts 62 of the supporting plate member 58. Moreover, it should be noted that the covering portion 60 does not cover the corner part 62 that is positioned at the boundary between the first mounting member 50 and the second mounting member 52. The portions of the covering portion 60 that cover the corner parts 62 of the supporting plate member 58 are rounded. The portions of the covering portion 60 that cover the first end part 64 and the second end part 66 of the supporting plate member 58 are rounded. Further, the portions of the covering portion 60 that cover the side surfaces of the supporting plate member 58 are rounded (refer to FIG. 4).

As shown in FIG. 2, the workpiece holders 10 are attached to the connecting members 16 by a plurality of second screw members 70 being passed through the plurality of first insertion holes 54 and fastened respectively into the plurality of second mounting holes 36. In FIG. 2, an example is shown in which the first mounting member 50 is attached to the connecting member 16, but the second mounting member 52 of the workpiece holder 10 can also be attached to the connecting member 16. The orientation of the workpiece holder 10 can be inclined by 90 degrees by changing the workpiece holder 10 between the state in which the first mounting member 50 is mounted on the connecting member 16 and the state in which the second mounting member 52 is mounted on the connecting member 16.

As shown in FIG. 1, the cover 17 covers the pair of fingers 22, the drive unit 18, and the pair of workpiece holders 10. The cover 17 has flexibility. The cover 17, for example, is engaged with a robot arm 100 on which the chuck main body 14 is mounted. The cover 17 is capable of being attached to and detached from the robot arm 100. The cover 17 may be a disposable item or may be a reusable item.

The cover 17 is transparent or translucent. More specifically, the cover 17 has a transparency so that the interior of the cover 17 can be visually confirmed from the exterior. However, the cover 17 may also be opaque. The cover 17, for example, is constituted by a resin material such as polyethylene or polypropylene.

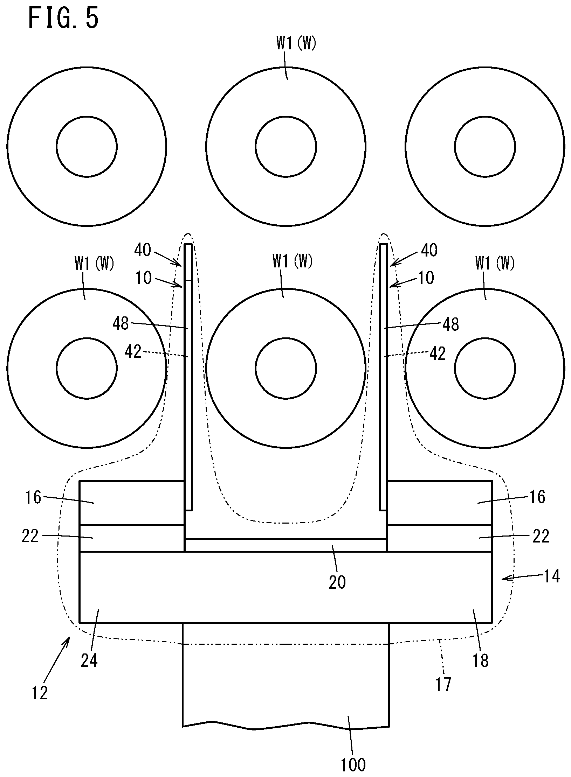

According to the present embodiment, as shown in FIG. 5 to FIG. 8, the chuck device 12 is used, for example, in order to clamp and transport a plurality of closely spaced workpieces W one by one. In this case, the gap around the periphery of the workpieces W is narrowed. Specifically, the chuck device 12 clamps and transports a first workpiece W1 (refer to FIG. 5) and a second workpiece W2 (refer to FIG. 8) whose external shapes are different by using one type of the workpiece holders 10.

In FIG. 5 and FIG. 6, the first workpiece W1, for example, is a cylindrical plastic bottle filled with a beverage liquid. In FIG. 8, the second workpiece W2 is a rectangular parallelepiped container filled with a beverage liquid. The external shape of the first workpiece W1 and the external shape of the second workpiece W2 are significantly different from each other.

In the case of transporting the first workpiece W1, as shown in FIG. 5, the chuck device 12 is caused to move in a manner so that the first workpiece W1 is positioned between the holding sheets 42 of the pair of workpiece holders 10. At this time, since the workpiece holders 10 are thinly formed, the workpiece holders 10 can be easily inserted into a gap between the adjacent first workpieces W1.

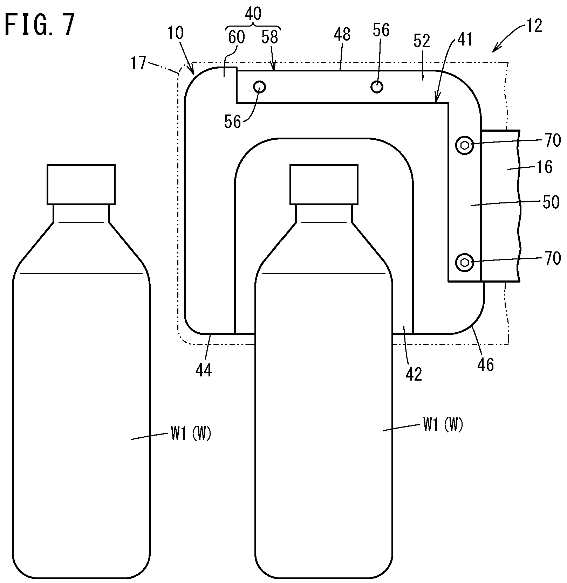

Subsequently, as shown in FIG. 6, the pair of fingers 22 are moved so as to approach toward each other by the drive unit 18, whereby the holding sheets 42 of the pair of workpiece holders 10 are pressed against the first workpiece W1 from both sides via the cover 17. At this time, since the first side part 44 is narrow, as shown in FIG. 7, it is possible to suppress a situation in which the first side part 44 comes into contact with the surrounding member of the first workpiece W1 that serves as the object to be grasped. The surrounding member of the first workpiece W1, for example, is a first workpiece W1 that is adjacent, in a direction opposite to the second side part 46, to the first workpiece W1 that serves as the object to be grasped.

In FIG. 6, the holding sheets 42 are pressed against the first workpiece W1 via the cover 17, and are thereby elastically deformed to conform to the external shape of the first workpiece W1. In accordance with this feature, the first workpiece W1 can be transported in a stable posture by the pair of workpiece holders 10.

Further, in the case of transporting the second workpiece W2, the chuck device 12 is operated in the same manner as in the method for transporting the first workpiece W1 that was described above. In this case, as shown in FIG. 8, the pair of fingers 22 are moved so as to approach toward each other by the drive unit 18, whereby the holding sheets 42 of the pair of workpiece holders 10 are pressed against the second workpiece W2 from both sides via the cover 17. At this time, since the first side part 44 is narrow, it is possible to suppress a situation in which the first side part 44 comes into contact with the surrounding member of the second workpiece W2 that serves as the object to be grasped. The surrounding member of the second workpiece W2, for example, is a second workpiece W2 that is adjacent, in a direction opposite to the second side part 46, to the second workpiece W2 that serves as the object to be grasped.

The holding sheets 42 are pressed against the second workpiece W2 via the cover 17, and are thereby deformed to conform to the external shape of the second workpiece W2 (a shape that differs from the external shape of the first workpiece W1). In accordance with this feature, the second workpiece W2 can be transported in a stable posture by the pair of workpiece holders 10.

As noted previously, according to the present embodiment, it is not necessary to change the workpiece holders 10 between the case of transporting the first workpiece W1, and the case of transporting the second workpiece W2. In other words, there is no need to prepare two types of workpiece holders, namely, one type of workpiece holders that are dedicated to transporting the first workpiece W1, and another type of workpiece holders that are dedicated to transporting the second workpiece W2. In accordance with this feature, it is possible to reduce the number of constituent parts, and it is also possible to shorten the time period required to prepare for transporting (to mount and dismount the workpiece holders 10).

Further, since the pair of fingers 22, the drive unit 18, and the pair of workpiece holders 10 are covered by the cover 17, the device can be used safely even in an environment in which food products or the like require waterproofing and dustproofing.

Further, according to the present embodiment, in the case that the workpieces W are grasped by the workpiece holders 10, the workpiece holders 10 come into contact with the cover 17. However, since the covering portion 60 is provided on a major portion of the supporting plate member 58 (the entirety of portions other than the first mounting member 50 and the second mounting member 52), it is possible to suppress a situation in which the cover 17 directly comes into contact with the hard supporting plate member 58. In other words, there is a high possibility that the cover 17 will come into contact with the covering portion 60 which has elasticity. In particular, since the covering portion 60 covers the corner parts 62 of the supporting plate member 58, a situation is suppressed in which the cover 17 comes into contact with the corner parts 62 of the supporting plate member 58. Therefore, a situation can be suppressed in which the cover 17 comes into contact with the supporting plate member 58 and is torn or broken thereby. Furthermore, since the portions of the covering portion 60 that cover the corner parts 62 of the supporting plate member 58 are rounded (the corner parts 62 do not have right angles or acute angles), it is further possible to suppress a situation in which the cover 17 is torn or broken.

Further, the present embodiment realizes the following advantageous effects.

According to the present embodiment, since the holding sheets 42 are each fixed to the first side part 44 and the second side part 46 in a state of extending across the opening between the first side part 44 and the second side part 46, the configuration of each of the workpiece holders 10 can be simplified. Further, since the holding sheets 42 having flexibility are pressed against the workpiece W and are thereby elastically deformed to conform to the external shape of the workpiece W, it is possible to clamp a plurality of the workpieces W of different external shapes by a single type of the workpiece holders 10. Furthermore, since the width L1 of the first side part 44 is less than or equal to one fourth of the distance L2 between the first side part 44 and the second side part 46, it is possible to suppress a situation in which, when the workpiece W is clamped, the first side part 44 interferes with the surrounding member of the workpiece W that serves as the object to be grasped.

### (First Exemplary Modification)

Next, a description will be given concerning workpiece holders 10A according to a first exemplary modification. In the present exemplary modification, the same constituent components as those of the aforementioned workpiece holders 10 are designated by the same reference numerals, and detailed description of such constituent components will be omitted.

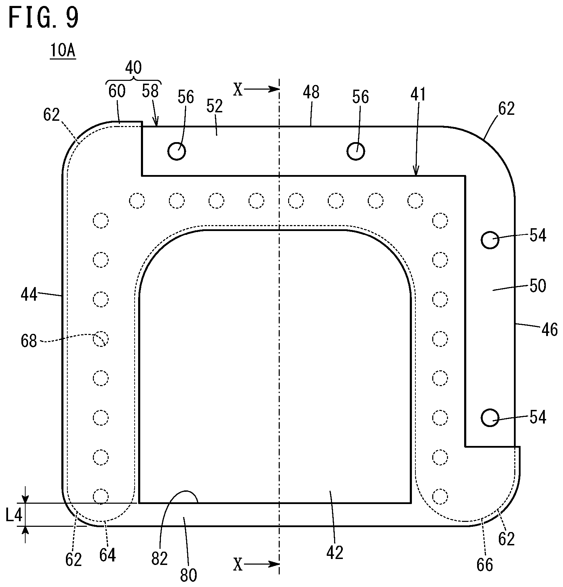

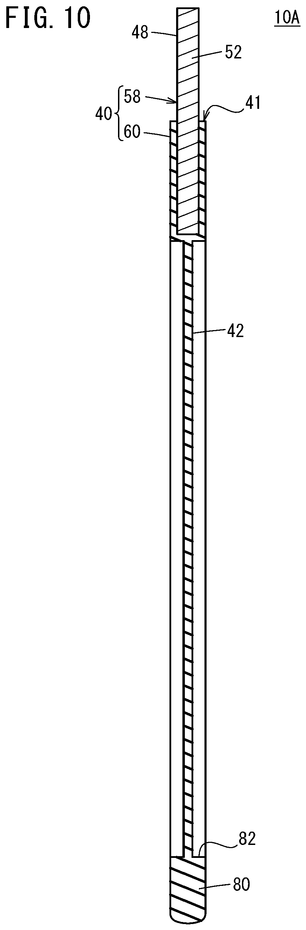

As shown in FIG. 9 and FIG. 10, in each of the workpiece holders 10A, a reinforcing portion 80 that is thicker than the holding sheet 42 is disposed at an end part of the holding sheet 42 on a side opposite to the connecting portion 48. The reinforcing portion 80 is molded integrally together with the holding sheet 42. More specifically, the reinforcing portion 80 is formed from the same material as the holding sheet 42. As shown in FIG. 9, the reinforcing portion 80 extends in a straight line shape from the first side part 44 to the second side part 46. Both end parts of the reinforcing portion 80 are connected to the covering portion 60 at the first side part 44 and the second side part 46.

A width L4 of the reinforcing portion 80 along the longitudinal direction of the first side part 44 is narrower than the width L1 of the first side part 44 (refer to FIG. 3). The reinforcing portion 80 bulges outwardly with respect to the holding sheet 42 on both sides of the holding sheet 42 in the thickness direction (refer to FIG. 10). More specifically, a pair of steps 82 are formed between the holding sheet 42 and the reinforcing portion 80. The thickness of the reinforcing portion 80 is approximately the same as the thickness of the portion of the frame member 40 that is covered by the covering portion 60.

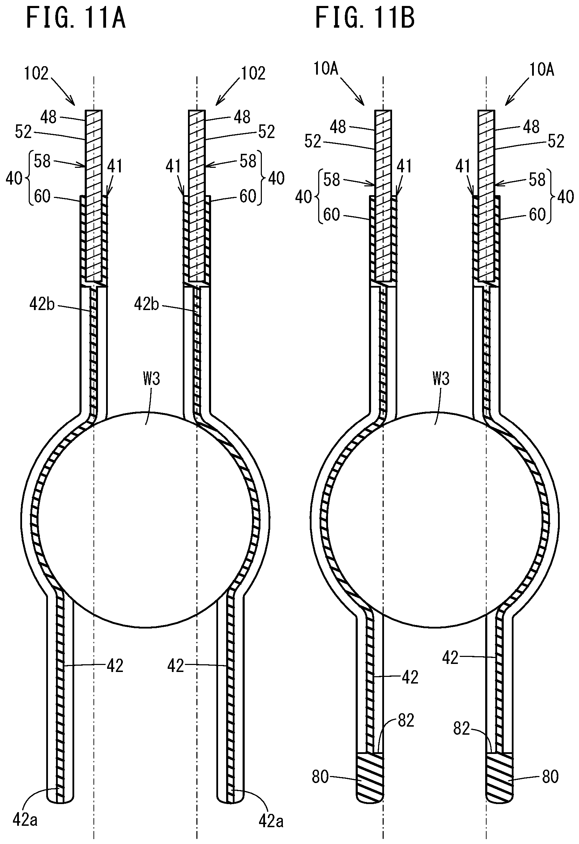

Next, a description will be given with reference to FIG. 11A and FIG. 11B concerning the advantageous effects of the workpiece holders 10A. FIG. 11A is an explanatory diagram of an example in which a workpiece W3 is held by a pair of workpiece holders 102 according to a comparative example, and FIG. 11B is an explanatory diagram of an example in which the workpiece W3 is held by the pair of workpiece holders 10A according to the present exemplary modification. Moreover, it should be noted that in FIG. 11A and FIG. 11B, illustration of the cover 17 is omitted.

As shown in FIG. 11A, in each of the workpiece holders 102 according to the comparative example, the reinforcing portion 80 is not provided. The workpiece holders 102 have the same configuration as the workpiece holders 10A according to the present exemplary modification, except that the reinforcing portions 80 are not provided. The workpiece W3 has a size such that it does not protrude from the holding sheets 42 when it is held by the pair of workpiece holders 102. The workpiece W3, for example, is a sphere.

In the case of the comparative example, when the holding sheets 42 of the pair of workpiece holders 102 are pressed against the workpiece W3 from both sides, the holding sheets 42 are deformed (elastically deformed) to conform to the external shape of the workpiece W3. At this time, end parts (first sheet end parts 42a) of the holding sheets 42 on a side opposite to the connecting portions 48 deform in a manner so as to spread further outwardly (in a direction in which the pair of workpiece holders 102 separate away from each other) than end parts (second sheet end parts 42b) of the holding sheets 42 that are adjacent to the connecting portions 48.

According to the present exemplary modification, as shown in FIG. 11B, the reinforcing portions 80 that are thicker than the holding sheets 42 are provided at the end parts of the holding sheets 42 on a side opposite to the connecting portions 48. Therefore, the reinforcing portions 80 are less likely to deform than the first sheet end parts 42a of the workpiece holders 102 according to the comparative example. Thus, when the holding sheets 42 of the pair of workpiece holders 10A are pressed against the workpiece W3 from both sides, a situation is suppressed in which the reinforcing portions 80 spread outward. In accordance with this feature, since the contact area between the workpiece W3 and the holding sheets 42 becomes larger than that of the workpiece holders 102 according to the comparative example, the holding force (the force required to separate the workpiece W3 away from the holding sheets 42) increases. Further, since the steps 82 are provided between the holding sheets 42 and the reinforcing portions 80, a situation in which the workpiece W3 falls off can be suppressed by the steps 82.

### (Second Exemplary Modification)

Next, a description will be given concerning workpiece holders 10B according to a second exemplary modification. In the present exemplary modification, the same constituent components as those of the aforementioned workpiece holders 10 are designated by the same reference numerals, and detailed description of such constituent components will be omitted.

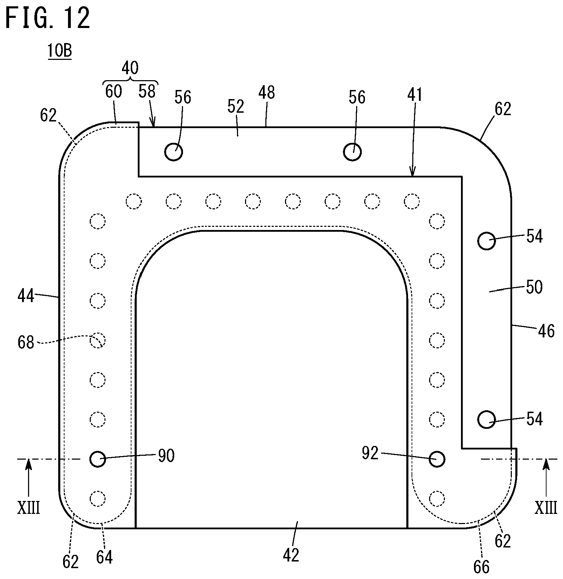

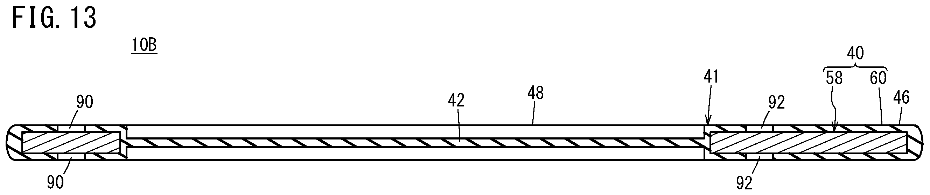

As shown in FIG. 12 and FIG. 13, the workpiece holders 10B differ from the above-described workpiece holders 10, in that a pair of first hole members 90 and a pair of second hole members 92 are formed in the covering portion 60.

As shown in FIG. 13, the pair of first hole members 90 are positioned on the first side part 44 in a manner so as to sandwich the supporting plate member 58 therebetween in the thickness direction of the supporting plate member 58. The first hole members 90 penetrate through the covering portion 60 in the thickness direction. The first hole members 90 are circular holes. The shape of the first hole members 90 is not particularly limited and may be of a polygonal shape.

In the first side part 44, the supporting plate member 58 is exposed to the exterior via the first hole members 90. The pair of first hole members 90 are disposed at positions that overlap each other when viewed in the thickness direction of the supporting plate member 58. As shown in FIG. 12, in the longitudinal direction of the first side part 44, the first hole members 90 are positioned more on a side opposite to the connecting portion 48 than the center of the first side part 44 in the longitudinal direction. The first hole members 90 are positioned in close proximity to the first end part 64 of the supporting plate member 58.

As shown in FIG. 13, the pair of second hole members 92 are positioned on the second side part 46 in a manner so as to sandwich the supporting plate member 58 therebetween in the thickness direction of the supporting plate member 58. The second hole members 92 penetrate through the covering portion 60 in the thickness direction. The second hole members 92 have the same shape as the first hole members 90.

In the second side part 46, the supporting plate member 58 is exposed to the exterior via the second hole members 92. The pair of second hole members 92 are disposed at positions that overlap each other when viewed in the thickness direction of the supporting plate member 58. As shown in FIG. 12, in the longitudinal direction of the second side part 46, the second hole members 92 are positioned more on a side opposite to the connecting portion 48 than the center of the second side part 46 in the longitudinal direction. The second hole members 92 are positioned in close proximity to the second end part 66 of the supporting plate member 58.

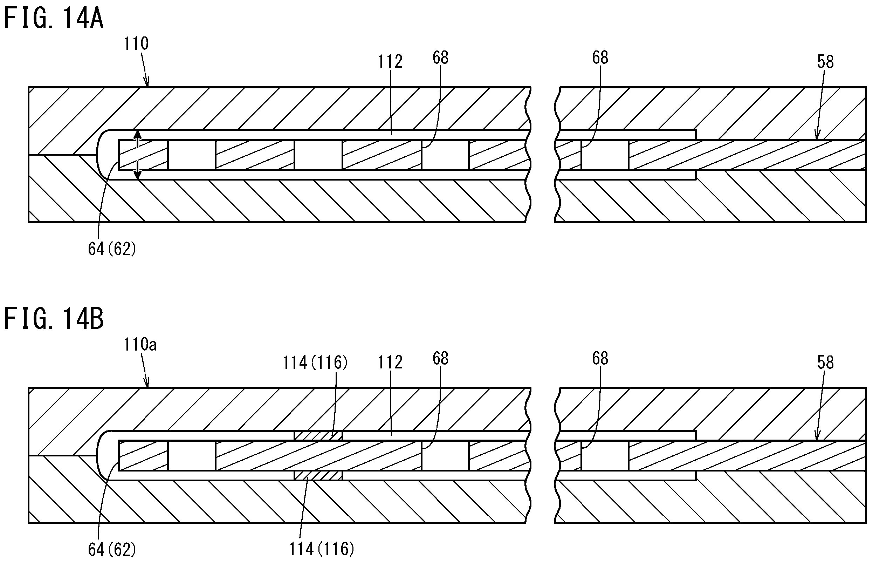

Incidentally, as shown in FIG. 14A, when the rubber sheet is attached to the supporting plate member 58 (when the rubber lining is performed), in a state in which the supporting plate member 58 is set in a mold 110, the first end part 64 and the second end part 66 of the supporting plate member 58 are easy to move (to flex) in the thickness direction of the supporting plate member 58 inside a cavity 112 of the mold 110. Upon doing so, when the rubber sheet is attached to the supporting plate member 58, the thickness of the covering portion 60 is likely to change on both sides of the supporting plate member 58 in the thickness direction. More specifically, it is not easy to set the thickness of the covering portion 60 on both sides of the supporting plate member 58 in the thickness direction to a set thickness (a target thickness). When such a mold 110 is used, the first hole members 90 and the second hole member 92 are not formed in the aforementioned covering portion 60.

In order to suppress the movement of the first end part 64 and the second end part 66 of the supporting plate member 58, as shown in FIG. 14B, a mold 110a can be used. The mold 110a includes a pair of first convex parts (convex parts) 114, and a pair of second convex parts 116. In a state in which the supporting plate member 58 is set in the mold 110a, the pair of first convex parts 114 support, from both sides, a portion (for example, a portion in close proximity to the first end part 64) of the supporting plate member 58 that forms the first side part 44. In accordance with this feature, when the rubber sheet is attached to the supporting plate member 58, the movement of the first end part 64 is suppressed by the pair of first convex parts 114. The first convex parts 114 are inserted into the hole members that are formed in the rubber sheet (the portions corresponding to the first hole members 90 of the covering portion 60).

In a state in which the supporting plate member 58 is set in the mold 110a, the pair of second convex parts 116 support, from both sides, a portion (for example, a portion in close proximity to the second end part 66) of the supporting plate member 58 that forms the second side part 46. In accordance with this feature, when the rubber sheet is attached to the supporting plate member 58, the movement (deflection) of the second end part 66 is suppressed by the pair of second convex parts 116. The second convex parts 116 are inserted into the hole members that are formed in the rubber sheet (the portions corresponding to the second hole members 92 of the covering portion 60).

In accordance with a method for manufacturing the holders 10B, it is possible to suppress a variation in the thickness of the covering portion 60 from a set thickness (a target thickness) on both sides of the supporting plate member 58 in the thickness direction.

The following supplementary notes are further disclosed in relation to the above-described embodiment.

### (Supplementary Note 1)

The first aspect of the present invention is the workpiece holder (10, 10A, 10B) installed on each of the pair of fingers (22) that move in one direction so as to approach toward and separate away from each other, the workpiece holder being configured to clamp the workpiece (W), the workpiece holder comprising the U-shaped frame member (40), and the holding sheet (42) having flexibility and fixed to the frame member, wherein the frame member includes the first side part (44) and the second side part (46) disposed in parallel in a state of being separated away from each other, and the connecting portion (48) that connects the first side part and the second side part, wherein the holding sheet is fixed to the first side part and the second side part in a state of extending across an opening between the first side part and the second side part, and the width (L1) of the first side part is less than or equal to one fourth of the distance (L2) between the first side part and the second side part.

In accordance with such a configuration, the configuration of the workpiece holders can be simplified, and a plurality of the workpieces of different external shapes can be clamped by a single type of workpiece holders. Further, when clamping the workpiece, it is possible to prevent the first side part from interfering with the member surrounding the workpiece (for example, another workpiece or the like).

### (Supplementary Note 2)

In the workpiece holder according to Supplementary Note 1, the holding sheet may cover the entirety of the opening.

In accordance with such a configuration, a ratio of the holding sheet to the workpiece holder can be made larger.

### (Supplementary Note 3)

In the workpiece holder according to Supplementary Note 1 or 2, the second side part may be wider than the first side part, and the mounting member (50) that is capable of being mounted on one of the pair of fingers may be provided on the second side part.

In accordance with such a configuration, while narrowing the width of the first side part, it is possible to increase the rigidity of the second side part on which the mounting member is provided.

### (Supplementary Note 4)

In the workpiece holder according to any one of Supplementary Notes 1 to 3, the mounting member (52) that is capable of being mounted on one of the pair of fingers may be provided on the connecting portion.

In accordance with such a configuration, while narrowing the width of the first side part, it is possible for the workpiece holder to be installed on the finger by the mounting member.

### (Supplementary Note 5)

In the workpiece holder according to any one of Supplementary Notes 1 to 4, the frame member may include the supporting plate member (58) having a shape conforming to the shape of the frame member, and the covering portion (60) that covers the supporting plate member, wherein the holding sheet and the covering portion may be integrally formed from a material containing rubber.

In accordance with such a configuration, the holding sheet can be firmly fixed by the covering portion to the supporting plate member.

### (Supplementary Note 6)

In the workpiece holder according to Supplementary Note 5, the covering portion may cover the corner part (62) of the supporting plate member.

In accordance with such a configuration, when the workpiece is grasped, even in the case that the frame member comes into contact with a surrounding member of the workpiece that serves as the object to be grasped, the covering portion functions as a buffer member (a cushion member), and it is therefore possible to suppress damage from occurring to the surrounding member and the workpiece holder.

### (Supplementary Note 7)

In the workpiece holder according to Supplementary Note 6, a portion of the covering portion that covers the corner part of the supporting plate member may be rounded.

In accordance with such a configuration, damage to the surrounding member and the workpiece holder can be further suppressed.

### (Supplementary Note 8)

In the workpiece holder according to any one of Supplementary Notes 5 to 7, the supporting plate member may be constituted by a metallic material.

In accordance with such a configuration, the rigidity of the frame member can be easily increased.

### (Supplementary Note 9)

In the workpiece holder according to any one of Supplementary Notes 1 to 8, the thickness of the holding sheet may be smaller than the thickness of the frame member.

In accordance with such a configuration, the holding sheet can be easily elastically deformed when pressed against the outer surface of the workpiece.

### (Supplementary Note 10)

In the workpiece holder according to any one of Supplementary Notes 1 to 9, the reinforcing portion (80) that is thicker than the holding sheet may be provided on an end part of the holding sheet on a side opposite to the connecting portion.

In accordance with such a configuration, when a workpiece of a size that does not protrude from the holding sheets is clamped by the pair of workpiece holders, the end parts (the reinforcing portions) of the holding sheets on the side opposite to the connecting portions are less likely to spread outward. In accordance with this feature, since the contact area of the holding sheets with the workpiece is made greater, the holding force of the workpiece can be increased. Further, since the steps can be formed between the holding sheet and the reinforcing portion, the workpiece can be hooked onto the steps. In accordance with this feature, it is possible to prevent the workpiece from falling off.

### (Supplementary Note 11)

In the workpiece holder according to Supplementary Note 10, the reinforcing portion may extend from the first side part to the second side part.

In accordance with such a configuration, the reinforcing portion is even less likely to spread outward when the workpiece is held.

### (Supplementary Note 12)

In the workpiece holder according to any one of Supplementary Notes 5 to 8, the pair of hole members (90) may be formed in the covering portion, the hole members being positioned on the first side part in a manner so as to sandwich the supporting plate member in the thickness direction of the supporting plate member, and penetrating through the covering portion in the thickness direction.

The workpiece holder having such a configuration can be manufactured by a mold including the pair of convex parts that serve to support the portion of the supporting plate member that forms the first side part. In this mold, when the rubber sheet is attached to the supporting plate member, movement (deflection) of the first side part can be suppressed by the pair of convex parts. Moreover, the convex parts of the mold are inserted into the hole members that are formed in the rubber sheet (the hole members that are formed in the covering portion). In the workpiece holder which is manufactured in this manner, in the first side part, it is possible to suppress a variation in the thickness of the covering portion from the set thickness on both sides of the supporting plate member in the thickness direction.

### (Supplementary Note 13)

In the workpiece holder according to Supplementary Note 12, the pair of hole members may be the pair of first hole members, and the pair of second hole members (92) may be formed in the covering portion, the second hole members being positioned on the second side part in a manner so as to sandwich the supporting plate member in the thickness direction of the supporting plate member, and penetrating through the covering portion in the thickness direction.

In accordance with such a configuration, in the second side part, it is possible to suppress a variation in the thickness of the covering portion from the set thickness on both sides of the supporting plate member in the thickness direction.

### (Supplementary Note 14)

In the workpiece holder according to Supplementary Note 12, in the longitudinal direction of the first side part, the pair of hole members may be positioned more on a side opposite to the connecting portion than the center of the first side part in the longitudinal direction.

In accordance with such a configuration, in the first side part, it is possible to further suppress a variation in the thickness of the covering portion from the set thickness on both sides of the supporting plate member in the thickness direction.

### (Supplementary Note 15)

In the workpiece holder according to Supplementary Note 13, in the longitudinal direction of the second side part, the pair of second hole members may be positioned more on a side opposite to the connecting portion than the center of the second side part in the longitudinal direction.

In accordance with such a configuration, in the second side part, it is possible to further suppress a variation in the thickness of the covering portion from the set thickness on both sides of the supporting plate member in the thickness direction.

### (Supplementary Note 16)

The second aspect of the present invention is the chuck device (12) comprising the pair of fingers that move in one direction so as to approach toward and separate away from each other, the drive unit (18) configured to move the pair of fingers, and the pair of workpiece holders installed respectively on the pair of fingers and configured to clamp the workpiece, wherein each of the pair of workpiece holders is the workpiece holder according to any one of Supplementary Notes 1 to 15.

### (Supplementary Note 17)

The chuck device according to Supplementary Note 16 may further comprise the cover (17) having flexibility and configured to cover the pair of fingers, the drive unit, and the pair of workpiece holders.

In accordance with such a configuration, the chuck device can be used safely even in an environment in which food products or the like require waterproofing and dustproofing.

### (Supplementary Note 18)

The third aspect of the present invention is characterized by the method for manufacturing the workpiece holder installed on each of the pair of fingers that move in one direction so as to approach toward and separate away from each other, the workpiece holder being configured to clamp the workpiece, wherein the workpiece holder includes the U-shaped frame member, and the holding sheet having flexibility and fixed to the frame member, wherein the frame member includes the first side part and the second side part disposed in parallel in a state of being separated away from each other, and the connecting portion that connects the first side part and the second side part, wherein the holding sheet is fixed to the first side part and the second side part in a state of extending across the opening between the first side part and the second side part, and the width of the first side part is less than or equal to one fourth of the distance between the first side part and the second side part, wherein the frame member includes the supporting plate member having a shape conforming to the shape of the frame member, and the covering portion that covers the supporting plate member, and wherein, in the method for manufacturing the workpiece holder, the rubber sheet is attached to the supporting plate member in a state where both sides of a portion of the supporting plate member that forms the first side part are supported by the pair of convex parts (114) provided on the mold (110a).

Moreover, the present invention is not limited to the above disclosure, and various modifications are possible without departing from the essence and gist of the present invention.

## Claims

1. A workpiece holder (10, 10A, 10B) installed on each of a pair of fingers (22) configured to move in one direction so as to approach toward and separate away from each other, the workpiece holder being configured to clamp a workpiece (W), the workpiece holder comprising:
a frame member (40) having a U-shape; and
a holding sheet (42) having flexibility and fixed to the frame member,
wherein the frame member includes:
a first side part (44) and a second side part (46) disposed in parallel in a state of being separated away from each other; and
a connecting portion (48) configured to connect the first side part and the second side part,
wherein the holding sheet is fixed to the first side part and the second side part in a state of extending across an opening between the first side part and the second side part, and
a width (L1) of the first side part is less than or equal to one fourth of a distance (L2) between the first side part and the second side part.

2. The workpiece holder according to claim 1, wherein the holding sheet covers an entirety of the opening.

3. The workpiece holder according to claim 1, wherein:
the second side part is wider than the first side part; and
a mounting member (50) configured to be mounted on one of the pair of fingers is provided on the second side part.

4. The workpiece holder according to claim 1, wherein a mounting member (52) configured to be mounted on one of the pair of fingers is provided on the connecting portion.

5. The workpiece holder according to claim 1, wherein the frame member includes:
a supporting plate member (58) having a shape conforming to the shape of the frame member; and
a covering portion (60) configured to cover the supporting plate member, and
wherein the holding sheet and the covering portion are integrally molded from a material containing rubber.

6. The workpiece holder according to claim 5, wherein the covering portion covers a corner part (62) of the supporting plate member.

7. The workpiece holder according to claim 6, wherein a portion of the covering portion that covers the corner part of the supporting plate member is rounded.

8. The workpiece holder according to claim 5, wherein the supporting plate member is constituted by a metallic material.

9. The workpiece holder according to claim 1, wherein a thickness of the holding sheet is smaller than a thickness of the frame member.

10. The workpiece holder according to claim 1, wherein a reinforcing portion (80) that is thicker than the holding sheet is provided on an end part of the holding sheet on a side opposite to the connecting portion.

11. The workpiece holder according to claim 10, wherein the reinforcing portion extends from the first side part to the second side part.

12. The workpiece holder according to claim 5, wherein a pair of hole members are formed in the covering portion, the hole members being positioned on the first side part in a manner so as to sandwich the supporting plate member in a thickness direction of the supporting plate member, and configured to penetrate through the covering portion in the thickness direction.

13. The workpiece holder according to claim 12, wherein the pair of hole members are pair of first hole members, and
a pair of second hole members (92) are formed in the covering portion, the second hole members being positioned on the second side part in a manner so as to sandwich the supporting plate member in the thickness direction of the supporting plate member, and configured to penetrate through the covering portion in the thickness direction.

14. The workpiece holder according to claim 12, wherein, in a longitudinal direction of the first side part, the pair of hole members are positioned more on a side opposite to the connecting portion than a center of the first side part in the longitudinal direction.

15. The workpiece holder according to claim 13, wherein, in a longitudinal direction of the second side part, the pair of second hole members are positioned more on a side opposite to the connecting portion than a center of the second side part in the longitudinal direction.

16. A chuck device (12), comprising:
a pair of fingers configured to move in one direction so as to approach toward and separate away from each other;
a drive unit (18) configured to move the pair of fingers; and
a pair of workpiece holders installed respectively on the pair of fingers and configured to clamp a workpiece,
wherein each of the pair of workpiece holders is the workpiece holder according to any one of claims 1 to 15.

17. The chuck device according to claim 16, further comprising a cover (17) having flexibility and configured to cover the pair of fingers, the drive unit, and the pair of workpiece holders.

18. A method for manufacturing a workpiece holder installed on each of a pair of fingers configured to move in one direction so as to approach toward and separate away from each other, the workpiece holder being configured to clamp a workpiece,
wherein the workpiece holder includes:
a frame member having a U-shape; and
a holding sheet having flexibility and fixed to the frame member,
wherein the frame member includes:
a first side part and a second side part disposed in parallel in a state of being separated away from each other; and
a connecting portion configured to connect the first side part and the second side part,
wherein the holding sheet is fixed to the first side part and the second side part in a state of extending across an opening between the first side part and the second side part, and
a width of the first side part is less than or equal to one fourth of a distance between the first side part and the second side part,
wherein the frame member includes:
a supporting plate member having a shape conforming to the shape of the frame member; and
a covering portion configured to cover the supporting plate member, and
wherein, in the method for manufacturing the workpiece holder, a rubber sheet is attached to the supporting plate member in a state where both sides of a portion of the supporting plate member that forms the first side part are supported by a pair of convex parts (114) provided on a mold (110a).
